# EUROPÄISCHE PATENTSCHRIFT

(11) **EP 1 441 570 B1**
(45) Veröffentlichungstag und Bekanntmachung des Hinweises auf die Patenterteilung: **02.11.2006**
(21) Anmeldenummer: 04001404.5
(22) Anmeldetag: 23.01.2004
(51) Int. Cl.: H05B 7/101, H05B 7/085, F16B 39/28

(54) **Kohlenstoffelektroden und deren Verbindungselemente mit gerichtet strukturierten Kontaktflächen**
Carbon electrodes and its connection elements with directionally structured contact surfaces
Electrodes en carbone et leurs éléments de connexion avec des surfaces de contact structurées directionellement

(30) Priorität: 24.01.2003 DE 10302956
(43) Veröffentlichungstag der Anmeldung: 28.07.2004
(73) Patentinhaber: SGL CARBON AG, 65203 Wiesbaden (DE)
(72) Erfinder: Baumann, Stefan, 86156 Augsburg (DE); Wimmer, Karl, Dr., 86695 Nordendorf (DE)

(56) Entgegenhaltungen:
- EP-A- 0 056 127
- US-A- 2 135 637
- US-A- 2 867 786
- US-A- 4 273 175
- US-A- 4 729 689

## Beschreibung

Die Erfindung betrifft Elemente eines Elektrodenstranges, der aus Kohlenstoffelektroden mit stirnseitigen Schachteln und Innengewinden und aus je zwei solche Elektroden verbindenden Kohlenstoff-Nippeln besteht oder der aus Kohlenstoffelektroden mit einer Schachtel mit Innengewinde an einer Stirnseite und mit integriertem Nippel an der anderen Stirnseite besteht, vorgesehen für einen Elektrodenstrang zum Einsatz in einem Lichtbogenofen zur Herstellung von hochschmelzenden Metallen, wobei die Elemente ideal ausgebildete Kontaktflächen mit daraus hervortretenden, gerichtet strukturierten, schuppigen Erhebungen haben.

Die Herstellung von carbonisierten oder graphitierten Kohlenstoffkörpern ist eine inzwischen seit über einhundert Jahren beherrschte Technik, die im industriellen Maßstab großtechnisch angewandt wird und deshalb in vielen Punkten ausgefeilt und bezüglich der Kosten optimiert ist. Eine der Beschreibungen dieser Technik findet man in ULLMANN'S ENCYCLOPEDIA OF INDUSTRIAL CHEMISTRY, Vol. A5, VCH Verlagsgesellschaft mbH, Weinheim,1986, S. 103 bis 113.

Die Anwendbarkeit der Elektroden, Nippel und Elektrodenstränge aus Kohlenstoff im Lichtbogenofen hängt von den bei der Herstellung erzielten Eigenschaften, insbesondere auch Oberflächen-Eigenschaften ab. Diese Oberflächen-Eigenschaften hängen z.B. von Werkstoffart (Graphitierungsgrad), vom Porengehalt, von der Korngröße, von der die Oberflächenrauheit bestimmenden Art der Bearbeitung ab. Die vorgenannten Faktoren bestimmen die Reibbeiwerte, die beim Fügen von zwei Körpern - etwa einer Elektrode und einem Nippel oder zwei Elektroden - und bei dem Aufeinandergleiten von zwei Flächen eine Rolle spielen.

Ein Lichtbogenofen enthält mindestens einen Strang aus Kohlenstoffelektroden. Ein solcher Strang wird am oberen Ende von einem Tragarm gehalten, über den auch der elektrische Strom in den Elektrodenstrang gelangt. Im Ofenbetrieb geht von der unteren Spitze des Stranges der Lichtbogen in das im Ofen befindliche Schmelzgut. Verursacht durch den Lichtbogen und die hohen Temperaturen im Ofen brennt der Elektrodenstrang an seinem unteren Ende langsam ab. Die Verkürzung des Elektrodenstranges wird dadurch ausgeglichen, dass der Strang stückweise in den Ofen nachgeschoben wird und bei Bedarf am oberen Ende des Stranges eine zusätzliche Elektrode aufgeschraubt wird. Bei Bedarf wird auch ein zum Teil abgebrannter Strang als Einheit aus dem Tragarm entnommen und durch einen frischen Strang ausreichender Länge ersetzt.

Das Anschrauben einzelner Kohlenstoff-Elektroden auf einen im Ofen befindlichen Strang oder das Zusammenschrauben von Elektroden zu einem frischen Strang erfolgt von Hand oder mit einer maschinellen Einrichtung. Insbesondere bei Elektroden mit großem Durchmesser von 600 mm oder darüber sind beträchtliche Kräfte und Drehmomente aufzubringen bzw. Verschraubarbeiten zu erbringen, um den Zusammenhalt eines Elektrodenstranges zu sichern. Der Zusammenhalt eines Stranges ist für die Funktion eines Lichtbogenofens von ausschlaggebender Bedeutung.

Der Zusammenhalt eines Stranges ist beim Transport, vorzugsweise jedoch beim Betrieb eines Ofens gefährdet. Beim Betrieb eines Ofens kommen wiederholt beträchtliche Biegemomente durch das Schwenken des Ofengefäßes einschließlich des Stranges auf den Elektrodenstrang beziehungsweise ist der Elektrodenstrang einer anhaltenden Vibration ausgesetzt; auch Schläge auf den Strang durch das Chargiergut belasten den Zusammenhalt des Stranges. Alle Belastungsarten - wiederholte Biegemomente, Vibrationen und Schläge - können eine Lockerung der Verschraubung von Elektroden verursachen. Eine Lockerung ist als das Ergebnis von unvermeidlichen und/oder nicht gewünschten Vorgängen anzusehen.

Zur Charakterisierung des Zusammenhaltes eines Stranges aus Kohlenstoffelektroden mit einer messtechnischen Größe bietet sich das "Lösemoment" an. Das Lösemoment zum Aufschrauben einer Elektrodenverbindung wird mit einer Messapparatur bestimmt. Unterhalb des Bereiches einer mechanischen Schädigung der beteiligten Gewinde ist die Lockerung einer Verschraubung um so unwahrscheinlicher und ist der Betrieb mit dem Elektrodenstrang um so sicherer, je höher das Lösemoment einer Verbindung zweier Elemente eines Elektrodenstranges ist.

Zum Verständnis seien die Folgen einer Lockerung der Schraubverbindungen eines Elektrodenstranges während des Ofenbetriebes skizziert:
Bei einer Lockerung ist davon auszugehen, dass sich die Verspannung der Verschraubverbindung reduziert. Damit nehmen auch die Anpresskräfte der Kontaktflächen benachbarter Strangelemente ab. Die Lockerung kann so weit fortschreiten, dass sich einige der Kontaktflächen voneinander trennen.
In der Folge erhöht sich der elektrische Widerstand in der Verbindung. Die in Kontakt verbliebenen Flächen werden mit einer erhöhten Stromdichte belastet. Die erhöhte Stromdichte führt zu einer lokalen thermischen Überhitzung.
Bei der Lockerung einer Schraubverbindung wird in der Regel der Nippel einer starken thermischen und mechanischen Belastung ausgesetzt. Letztlich ist das mechanische Versagen des Nippels durch Überhitzung und mechanische Belastung vorgezeichnet. In der Folge fällt die Spitze des Elektrodenstranges ab und stürzt in die Stahlschmelze, der Lichtbogen bricht ab, der Schmelzvorgang ist beendet.

Um den Problemen des ungenügenden Zusammenhaltes und des ungenügenden Stromüberganges von einem Teil eines Elektrodenstranges zum nächsten zu begegnen, sind sehr unterschiedliche Überlegungen angestellt worden und es wird die unten geschilderte Praxis angewandt.

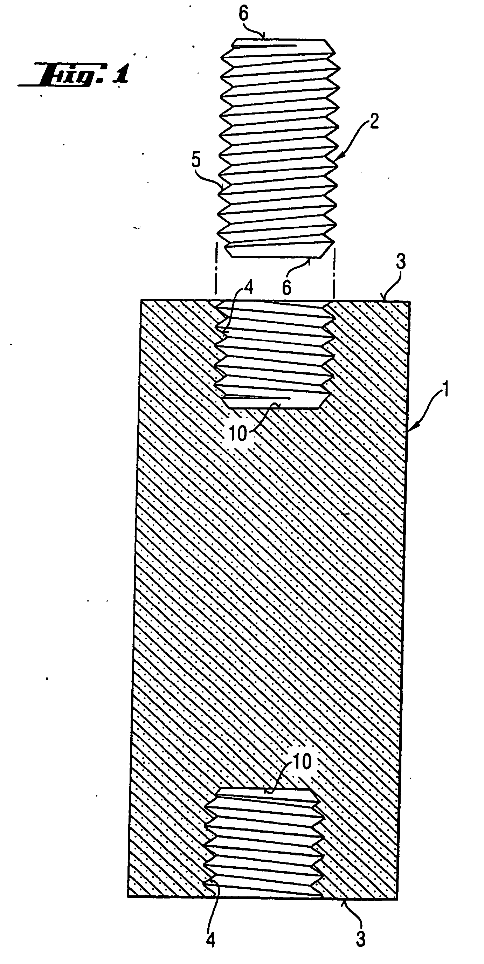

In einem Artikel von J. K. LANCASTER "Transitions in the Friction and Wear of Carbons and Graphites Sliding Against Themselves" aus ASLE TRANSACTIONS, Vol. 18, 3, S.187 bis 201 werden die Reibungsverhältnisse zwischen Kohlenstoffkörpern vorzugsweise bei unterschiedlichen Reibgeschwindigkeiten untersucht. Man kann dieser Veröffentlichung keine Lehre entnehmen, wie zwei Kohlenstoffkörper möglichst fest gegeneinander verschraubt werden können, sieht man von der allgemeinen Einsicht ab, dass bei sehr niedrigen Relativgeschwindigkeiten der beiden Kohlenstoffkörper niedrige Reibbeiwerte beobachtet werden, s. Figuren 1, 2 und 6. Diese Einsicht deutet eher auf ein leichtes voneinander Abgleiten von ruhenden Kohlenstoffkörpern hin.

In anderen Fachgebieten hat man ebenfalls versucht, das Problem der Lockerung von Befestigungselementen zu lösen. In der deutschen Offenlegungsschrift DE 41 37 020 werden selbstsichernde Befestigungselemente wie z. B. Schrauben und Muttern aus nicht beschriebenen Werkstoffen beschrieben. Das Element hat in der mit einem Bauteil zusammenwirkenden Stirnfläche eine Anzahl von noppenartigen Vorsprüngen. Die Vorsprünge sind als Pyramiden oder Kegel mit einer Höhe von weniger als 1 mm ausgebildet, wobei der Winkel an der Pyramiden- oder Kegelspitze mindestens 90° beträgt. Die Pyramiden oder Kegel sollen sich beim Verschrauben in die Oberflächen der zu verspannenden Bauteile eindrücken und so das Zurückdrehen der Befestigungselemente verhindern. In der Offenlegungsschrift wird in Spalte 2, Zeile 9 auf das "Setzen" und die damit verbundene Verringerung der Vorspannung hingewiesen. Die Pyramiden oder Kegel sind gleichmäßig über die Stirnfläche des Befestigungselementes verteilt. Das Befestigungselement hat keine gerichtet strukturierte Kontaktfläche, hat also keine Vorzugsrichtung mit einer besonderen Wirkung.
Bezogen auf das Verschrauben von Strängen aus Kohlenstoff-Elektroden sei darauf hingewiesen, dass makroskopische Noppen auf den Kontaktflächen der Elektroden oder Nippel wegen des keramischen und damit spröden Charakters der Kohlenstoffe beim Verschrauben wegplatzen würden. Möglicherweise würden sogar beträchtliche Stücke aus den Stirnflächen der Strangelemente springen.

Asymmetrische Noppen in den Kontaktflächen von besonderen Befestigungselementen werden in der Internationalen Anmeldung WO 92/14939 beschrieben. Mit dieser Vorzugsrichtung verhindert eine begrenzte Zahl "makroskopischer", auf den Umfang verteilter Noppen das unbeabsichtigte Lösen der beschriebenen zwei- oder dreiteiligen Schraubverbindung. Ein nicht unwichtiges Merkmal solcher Schraubverbindungen ist der Reibbeiwert, der zwischen den flachen Anstiegen zweier sich gegenüber stehender Noppen von zwei Befestigungselementen niedriger ist als der zwischen den steilen Anstiegen zweier sich gegenüber stehender Noppen. Dazu trägt eine Gleitschicht bei, die auf den flachen Anstiegen aufgetragen ist. Es bedarf also eines nicht unbeträchtlichen Aufwandes, um diese Befestigungselemente gegen das unbeabsichtigte Lösen von Schraubverbindungen herzustellen.
Bezogen auf das Verschrauben von Strängen aus Kohlenstoff-Elektroden sei darauf hingewiesen, dass makroskopische Noppen auf den Kontaktflächen der Elektroden oder Nippel wegen des keramischen und damit spröden Charakters der Kohlenstoffe beim Verschrauben wegplatzen würden. Möglicherweise würden sogar beträchtliche Stücke aus den Stirnflächen der Strangelemente springen.

In der deutschen Offenlegungsschrift DE 34 42 316 A1 wird ein doppelkonischer Nippel mit gewindelosem Mittelteil beschrieben; mit einem solchen Nippel werden Graphitelektroden verschraubt. Zwischen dem Mittelstück des Nippels und den Schachteln der Kohlenstoffelektroden ist ein Dehnungsspalt vorgesehen, der mit einer kompressiblen Masse gefüllt wird.
Dieses Prinzip soll in erster Linie die (tangentialen) Spannungsspitzen in der Elektrodenschachtel vermindern und Elektrodenbrüche verhüten womit es sich vollständig von dem erfindungsgemäßen Prinzip der Verminderung der Lockerung von verschraubten Kohlenstoffelektroden unterscheidet.

In der amerikanischen Patentschrift US 2,527,294 werden Kohlenstoffelektroden und/oder Nippel beschrieben, deren Thermoscbockbeständigkeit und Schlagfestigkeit durch Einbringen von Längsschlitzen in diese Elemente verbessert wird. Dieses Prinzip soll in ähnlicher Weise wie nach der Schrift DE 34 42 316 A1 (tangentiale) Spannungsspitzen in der Elektrodenschachtel vermindern und Elektrodenbrüche verhüten. Damit unterscheidet es sich ebenfalls vollständig von dem erfindungsgemäßen Prinzip der Verminderung der Lockerung von verschraubten Kohlenstoffelektroden.

In der europäischen Patentanmeldung EP 056127 B1 werden Graphitelektroden vorgeschlagen, welche an mindestens einer Kontaktfläche zum benachbarten Elektrodenabschnitt in Richtung auf die andere Kontaktfläche vorspringende flächige Kontaktelemente aufweisen, die elastisch verformbare, vorspringende Flächenbereiche aufweisen, die im verbundenen Zustand der Elektrodenabschnitte in Kontakt mit der anderen Kontaktfläche liegen. Dadurch soll zwischen benachbarten Elektrodenabschnitten trotz bearbeitungsbedingter teilweise ungenügender Kontaktierung der Kontaktflächen der Elektroden eine hohe elektrische Leitfähigkeit gesichert werden. Ziel dieser Erfindung ist somit nicht die Vermeidung der Lockerung des Elektrodenstranges Außerdem werden separate Kontaktelemente eingeführt, die den Elektrodenstrang mit zusätzlicher Komplexität und Kosten belasten.

In der Praxis des Stahlwerks versucht man, die Elektroden möglichst fest aneinander zu schrauben. Wie oben erwähnt, sind die von Hand einbringbaren Kräfte, Drehmomente bzw. Verschraubarbeiten begrenzt. Mit maschinellen Einrichtungen können diese Größen beträchtlich gesteigert werden, es wird jedoch nur in einem Teil der Stahlwerke mit solchen maschinellen Verschraubeinrichtungen gearbeitet. Die Stahlwerkspraxis zeigt, dass immer wieder Lockerungen in den Elektrodensträngen vorkommen.

Es bestand daher die Aufgabe, die Verbindungsstellen eines Stranges aus Kohlenstoffelektroden so auszuführen, dass keine Lockerung der einzelnen Elemente des Stranges voneinander auftritt oder dass eine hohe Sicherheit des Zusammenhaltes eines Stranges gegeben ist.
Eine weitere Aufgabe bestand darin, das messbare Lösemoment zwischen benachbarten Elementen eines Elektrodenstranges zu erhöhen.
Erfindungsgemäß sind Elemente eines Elektrodenstranges entweder Kohlenstoffelektroden mit stirnseitigen Schachteln und Innengewinden und je zwei solche Elektroden verbindende Kohlenstoff-Nippel oder Kohlenstoffelektroden mit einer Schachtel mit Innengewinde an einer Stirnseite und mit integriertem Nippel an der anderen Stirnseite (auch als Monotroden bezeichnet).
Dem gemäß sind benachbarte Elemente eines Elektrodenstranges im Sinne der Erfindung jeweils zwei benachbarte Kohlenstoffelektroden, welche durch einen separaten oder durch, in einen der beiden Elektroden integrierten. Kohlenstoff-Nippel verbunden sind. Außerdem sind benachbarte Elemente eines Elektrodenstranges im Sinne der Erfindung ein separater Kohlenstoff-Nippel und jeweils die zwei Kohlenstoffelektrode, welche durch diesen Nippel verbunden sind.

Die Aufgabe wird gemäß dem kennzeichnenden Teil des Anspruches 1 dadurch gelöst, dass die Kohlenstoffelektrode und/oder ein je zwei Elektroden verbindender Kohlenstoff-Nippel auf Kontaktflächen zum nächsten Element des Elektrodenstranges eine Oberflächenstruktur aufweist, deren gerichtet strukturierte, schuppige Erhebungen über der ideal ausgebildeten Kontaktfläche in einem Höhenbereich von einem bis hundert Mikrometern hervortreten, und dass die benachbarten Kontaktflächen einer Schraubverbindung einen Anpressdruck im Bereich von 0,1 bis 80 N/mm² haben.

Die weitere Aufgabe wird gemäß dem kennzeichnenden Teil des Anspruches 10 dadurch gelöst, dass die gleichartigen tangentialen Richtungen - entweder Befestigungs- oder Lösungsrichtung der Schraubverbindung - der gerichtet strukturierten Kontaktflächen von zwei benachbarten Elementen eines Elektrodenstranges jeweils gegensinnig ausgerichtet sind.

Die Nachteile des Standes der Technik werden durch die hiermit vorgelegte Erfindung gerade ausgeschlossen.
Ein wesentlicher Vorteil der Erfindung besteht in den kleinen Dimensionen der asymmetrischen Noppen bzw. Schuppen auf den Kontaktflächen. Kleine Schuppen verursachen bei Verformungen während des Verschraubvorganges keine Ausplatzungen an den keramischen Körpern der Elektroden oder Nippel aus Kohlenstoff oder Graphit.

Ein anderer Vorteil besteht darin, dass es nicht notwendig ist, eine Gleitschicht auf den Noppen / Schuppen oder auf den Kontaktflächen anzubringen.
Ein weiterer Vorteil besteht darin, dass übliche Anpressdrucke von benachbarten Elementen in den Elektrodensträngen genügen, um eine Lockerung zu unterdrücken. Bei den üblichen Anpressdrucken verhaken sich die gegensinnig ausgerichteten schuppigen Erhebungen benachbarter Elemente im Strang.

Die Begriffe im folgenden Text sind so zu verstehen:
- Die Enden einer Elektrode werden auch mit *Stirnseite* bezeichnet.
- Eine Elektrode hat eine zylindrische Mantelfläche und beidseitig je eine senkrecht zur Elektrodenachse angeordnete *Stirnfläche.*
- Eine *Schachtel* ist eine koaxial angeordnete Vertiefung in der Stirnseite einer Elektrode. In die koaxialen Innenwände einer Schachtel sind meist zylindrische oder konische Innengewinde eingearbeitet.
- Ein *Nippel* ist eine zylindrische oder doppelkonische Schraube mit beidseitig je einer senkrecht zur Nippelachse angeordneten Stirnfläche. Ein Nippel wird zwecks Verbindung zweier Elektroden etwa je zur Hälfte in eine Schachtel benachbarter Elektroden eingeschraubt.
- Ein *Preset* besteht aus einer Elektrode und einem in eine Schachtel der Elektrode zur Hälfte darin eingeschraubten Nippel.
- Manche Elektroden haben nur an einer Stirnseite eine Schachtel und an der anderen Stirnseite ein nach außen weisendes koaxiales Gewinde. Ein solches nach außen weisendes koaxiales Gewinde wird als *integrierter Nippel* bezeichnet.
- Nicht nur eine Elektrode und ein Nippel haben Stirnflächen sondern auch der integrierte Nippel hat eine *äußere,* senkrecht zur Nippelachse angeordnete *Stirnfläche.*
- Unter den *Kontaktflächen benachbarter Elemente* werden solche Kontaktflächen verstanden, die durch Verschrauben der Elemente gegeneinander gedrückt werden.
- *Ideal ausgebildete Kontaktflächen* sind solche gekrümmte oder ebene Flächen, die nicht von Erhebungen oder Vertiefungen gestört sind.
- Sind asymmetrische, schuppige Erhebungen gleichsinnig auf einer ideal ausgebildeten Kontaktfläche angeordnet, so wird diese Gesamtheit als *gerichtete Oberflächenstruktur* bezeichnet.
- Wenn eine Kontaktfläche in einem Strang aus Kohlenstoffelektroden eine gerichtete Oberflächenstruktur aufweist, so ist es nicht unwesentlich, in welcher Richtung die Kontaktfläche genutzt wird. In einem ersten Fall kann die gerichtete Oberflächenstruktur vom flachen Anstieg zum steilen Anstieg der Flanken der schuppige Erhebungen durchlaufen werden, in einem zweiten Fall kann die gerichtete Oberflächenstruktur vom steilen Anstieg zum flachen Anstieg der Flanken der schuppige Erhebungen durchlaufen werden. Im ersten Fall ist der Widerstand - unter Beachtung sinnvoller Randbedingungen bei den beanspruchten geringen Höhen der schuppigen Erhebungen - gegen eine Bewegung über die gerichtete Oberflächenstruktur geringer als im zweiten Fall. Eine im wesentlichen senkrecht zu den beiden erstgenannten Bewegungen verlaufende Bewegung über die gerichtete Oberflächenstruktur wird für diese Betrachtungen nicht benötigt. Es ist nun zweckmäßig, bei rechtsdrehenden Schrauben die gerichtete Oberflächenstruktur so zu orientieren, dass bei einer Rechtsdrehung (Befestigung der Schraubverbindung) die gerichtete Oberflächenstruktur vom flachen Anstieg zum steilen Anstieg der Flanken der schuppige Erhebungen durchlaufen wird, was dem o. g. ersten Fall - mit niedrigem Widerstand - entspricht. Diese Orientierung der Oberflächenstruktur wird mit dieser Schraubbewegung als *Befestigungsrichtung* bezeichnet.
- Wird die rechtsdrehende Schraube bei gleich ausgerichteter Oberflächenstruktur nach links gedreht (Lösung der Schraubverbindung), was dem o. g. zweiten Fall - mit hohem Widerstand - entspricht, so wird die Richtung dieser Schraubbewegung als *Lösungsrichtung* bezeichnet.
- Die schuppigen Erhebungen haben einen - bezogen auf die Längsachsen der meist zylindrischen Elemente eines Elektrodenstranges - im wesentlichen radial orientierten *Kamm.*
- Die *Kammlänge* einer schuppigen Erhebung wird durch die Projektion des üblicherweise unregelmäßigen Kammes auf einen von der Längsachse der meist zylindrischen Elemente eines Elektrodenstranges ausgehenden Radialstrahl definiert.

Üblicherweise werden Kohlenstoffelektroden mit Kohlenstoff-Nippeln zu einem Elektrodenstrang verschraubt, wobei die Elektroden an beiden Stirnseiten eine Schachtel aufweisen. Nicht alle Elektroden haben an beiden Stirnseiten koaxial angeordnete Schachteln mit Innengewinden. Vielmehr gibt es Elektroden, die nur an einer Stirnseite eine solche Schachtel aufweisen und an der anderen Stirnseite einen integrierten koaxialen Nippel haben. Beide Arten von Elektroden haben die erfindungsgemäße Oberflächenstruktur auf der gewünschten Kontaktfläche, wobei die gerichtet strukturierten, schuppigen Erhebungen aus den ideal ausgebildeten Kontaktflächen heraustreten. Die gewünschte Kontaktfläche besteht bei der üblichen Elektrode an jeweils einer Stirnseite aus einer oder beiden der Flächen von Stirnfläche der Elektrode und von Gewindeflächen der Elektrodenschachtel. Letzteres gilt auch für die Elektroden mit nur einer Schachtel. An der anderen Stirnseite der Elektrode mit nur einer Schachtel besteht die gewünschte Kontaktfläche aus einer oder beiden der Flächen von Stirnfläche der Elektrode und Gewindeflächen des integrierten koaxialen Nippels.
Die Kontaktflächen beider benachbarter Elemente sind gerichtet strukturiert. Die aufeinander treffenden gerichteten Oberflächenstrukturen der Kontaktflächen sind immer gegensinnig orientiert.
Es werden dann sichere oder sich nicht wieder lockernde Schraubverbindungen erreicht, wenn zwei Kriterien erfüllt sind: Erstens wenn der Anpressdruck benachbarter Kontaktflächen im Bereich von 0,1 bis 80N/mm² liegt, zweitens wenn die gerichtet strukturierten, schuppigen Erhebungen über der ideal ausgebildeten Kontaktfläche in einem geringen Höhenbereich von einem bis hundert Mikrometern hervortreten. Es war nicht naheliegend, von den kleinen, schuppigen Erhebungen im zusammengeschraubten Zustand der Elemente eines Stranges eine wesentlich bessere Lockerungssicherung zu erwarten. Es hat sich gezeigt, daß die kleinen, schuppigen Erhebungen auch den mechanischen Belastungen der Vibrationen widerstehen.

Die Lösung der Aufgaben wird durch die kennzeichnenden Teile der Ansprüche zwei bis 15 in vorteilhafter Weise ausgestaltet.

In den im Stand der Technik zitierten Schriften DE 41 37 020 und WO 92/14939 werden Noppen nur auf ebenen Funktionsflächen der Befestigungselemente beschrieben. Wegen der leichteren Herstellbarkeit von regelmäßig gestalteten Noppen liegt diese Art der Ausbildung von Noppen auf der Hand. Die erfindungsgemäßen gerichtet strukturierten, schuppigen Erhebungen sind jedoch so klein, dass sie sowohl auf ebenen Flächen wie Elektrodenstirnseiten als auch auf gekrümmten Flächen wie etwa den Gewindegängen der Nippel angebracht werden.

Bei Klettverschlüssen ist es die Regel, dass der eigentliche Verschluss aus einem anderen Material besteht als die miteinander zu verbindenden Teile. Würde man die gerichtet strukturierten, schuppigen Erhebungen bei einem Strang aus Kohlenstoffelektroden aus einem anderen Material machen als die Elektroden selbst, so hätte man ein kaum zu überwindendes Problem bei der Materialauswahl. Die meisten Materialien würden die thermische Belastung bei der Anwendung eines so gefügten Elektrodenstranges nicht überstehen und der Strang würde beim Betrieb eines Lichtbogenofens auseinanderfallen. Daher ist es eine wichtige Ausgestaltung des erfindungsgemäßen Gedankens, dass die schuppigen Erhebungen auf den gerichtet strukturierten Kontaktflächen des Elektrodenstranges arteigenes Material der Elemente des Stranges sind.

Die schuppigen Erhebungen haben eine im wesentlichen asymmetrische, durch einen unterschiedlich steilen Anstieg der Flanken charakterisierte Gestalt. Die Asymmetrie drückt sich darin aus, dass die Flanken der schuppigen Erhebungen in der Befestigungsrichtung der Schraubverbindung einen im wesentlichen flachen Anstieg und in der entgegengesetzten Lösungsrichtung der Schraubverbindung einen im wesentlichen steilen Anstieg haben. Mit dieser Ausgestaltung der Schuppen wird eine bessere Lockerungssicherung erreicht als mit symmetrisch geformten Schuppen.

Eine Einengung der Orientierung der Schuppen und damit Verbesserung der Lockerungssicherung wird dadurch erreicht, dass die höchsten Höhen der schuppigen Erhebungen als Spitzen oder als im wesentlichen radial orientierte Kämme - bezogen auf die Längsachsen der meist zylindrischen Elemente eines Elektrodenstranges - ausgebildet sind.

Würden die asymmetrischen Schuppen in verschiedenen Richtungen auf der ideal ausgebildeten Kontaktfläche verteilt sein, so wäre das Lockerungsverhalten ähnlich wie bei symmetrisch geformten Schuppen. Um eine bessere Lockerungssicherung zu erreichen, werden alle asymmetrischen Schuppen gleichsinnig angeordnet. Erfindungsgemäß wird jeweils der flache Anstieg aller schuppigen Erhebungen in der Befestigungsrichtung in einer Kontaktfläche - eines Elementes eines Elektrodenstranges gemäß Anspruch 1 - angeordnet.

Die Lockerungssicherung der Verbindung eines Elektrodenstranges wird mit wenigen der kleinen, asymmetrischen, arteigenen schuppigen Erhebungen nicht gelingen. Um eine technisch nützliche Lockerungssicherung zu erreichen, sind beträchtliche Schuppenmengen auf den Kontaktflächen anzuordnen. Folgende Zahlen sind zu nennen: Aus den jeweiligen ideal ausgebildeten Kontaktflächen treten mindestens 100 Meter Kammlänge der schuppigen Erhebungen je Quadratmeter Kontaktfläche, vorzugsweise 300 Meter Kammlänge der schuppigen Erhebungen je Quadratmeter Kontaktfläche, hervor. Diese Menge an schuppigen Erhebungen ist entweder statistisch über die jeweilige Fläche verteilt oder sie bedeckt die Fläche nur partiell beziehungsweise in Mustern.

Der Erfolg der Lockerungssicherung ist dann am besten, wenn der Widerstand gegen eine Bewegung über die gerichtet strukturierte Kontaktfläche am höchsten ist. Dies gilt auch beim Zusammenwirken zweier strukturierter Kontaktflächen wie bei einer Schraube. Bei einer rechtsdrehende Schraube ist der Widerstand gegen eine Lockerung erfindungsgemäß dann am höchsten, wenn nach links gedreht wird, also in Lösungsrichtung gedreht wird. Voraussetzung ist, dass die gleichartigen tangentialen Richtungen - hier Lösungsrichtung der Schraubverbindung - der beiden gerichtet strukturierten Kontaktflächen von zwei benachbarten Elementen eines Elektrodenstranges jeweils gegensinnig ausgerichtet sind.

Die verschiedenen Möglichkeiten der Ausgestaltung der Erfindung lassen eine Bandbreite von nachweisbaren Lösemomenten für eine Schraubverbindung von Elektrodensträngen mit zwei erfindungsgemäßen, gegensinnig ausgerichteten, gleichartigen tangentialen Richtungen der gerichtet strukturierten Kontaktflächen zu. Wichtige variierbare Parameter sind die Höhe der schuppigen Erhöhungen, die Winkel der Anstiege an den Flanken der Schuppen, die Breiten der Schuppen und die Menge und Verteilung der Schuppen. Unter Nutzung dieser Parameter werden bei einem Anpressdruck im Bereich von 0,1 bis 80 N/mm² der verschraubten, benachbarten Elemente eines Elektrodenstranges erfindungsgemäß um mindestens 20 % größere Lösemomente festgestellt als bei mit nicht gerichtet strukturierten Kontaktflächen versehenen und bei einem Anpressdruck im Bereich von 0,1 bis 80 N/mm² verschraubten, benachbarten Elementen eines Elektrodenstranges. Diese Verbesserung der Lösemomente von meist maschinell verschraubten Verbindungen wird noch übertroffen durch die Lösemomente von handverschraubten Verbindungen von Elementen eines Elektrodenstranges. Solche Verbindungen sind durch relativ niedrige Anpressdrucke von 0,1 bis 2 N/mm² benachbarter Elemente eines Elektrodenstranges gekennzeichnet. Erfindungsgemäß werden bei solchen Verbindungen um mindestens 30 % größere Lösemomente festgestellt als bei mit nicht gerichtet strukturierten Kontaktflächen versehenen und bei einem Anpressdruck im Bereich von 0,1 bis 2 N/mm² verschraubten, benachbarten Elementen eines Elektrodenstranges.

Eine für den Elektrodennutzer, meistens ein Elektro-Stahlwerk, zweckmäßige Lieferform ist das Preset. Die Kontaktfläche des Preset wird beim Elektrodenhersteller mit gerichteter Oberflächenstruktur ausgeführt und Elektrode sowie Nippel zusammengeschraubt. Dabei ist die gerichtete Oberflächenstruktur auf den Gewindeflächen der Elektrodenschachtel und auf den Gewindeflächen des Nippels angebracht, in Sonderfällen nur entweder auf den Gewindeflächen der Elektrodenschachtel oder auf den Gewindeflächen des Nippels.

Wird ein Preset im Lichtbogenofen eingesetzt, so hat auch das Preset erfindungsgemäß auf einer oder mehreren der Kontaktflächen zum nächsten Preset oder zum nächsten Teil des Elektrodenstranges eine gerichtete Oberflächenstruktur mit gegensinniger Orientierung. Dabei hat das Preset an der einen Stirnseite eine Kontaktfläche, die aus einer oder beiden der Flächen von Stirnfläche der Elektrode und von Gewindeflächen der Elektrodenschachtel besteht, und an der anderen Stirnseite hat das Preset eine Kontaktfläche, die aus einer oder beiden der Flächen von Stirnfläche der Elektrode und Gewindeflächen des Nippels besteht.

Während bisher das Lockerungsrisiko bei handverschraubten Verbindungen nur durch zusätzlichen Aufwand begrenzt werden konnte, zum Teil durch nachträgliche Sicherungsmaßnahmen im Stahlwerk, wird die erfindungsgemäße Ausführung bereits sinnvoll in den Herstellungsprozess integriert.

Auf einem Verschraubstand der Fa. Piccardi (Dalmine(Bergamo)/ Italien) mit der Bezeichnung "Nipplingstation", Baujahr 1997, wurden zwei Graphitelektroden mit Durchmessern von jeweils 600 mm mit einem passenden Nippel zu einem Elektrodenstrang verschraubt. Dabei wurde ein Preset aus einer Elektrode und einem bereits in eine Schachtel der Elektrode vorverschraubten Nippel eingesetzt. Preset und Elektrode wurden miteinander verschraubt. Bei Erreichen eines Anzugsmomentes von 4000 Nm wurde die Verschraubung beendet.
Um die Sicherheit des Zusammenhaltes der Verschraubung zu charakterisieren, wurde die Verbindung anschließend wieder geöffnet und dabei das Lösemoment gemessen.

Dieses prinzipielle Vorgehen wurde in drei Varianten A, B und C ausgeführt:

### Variante A

Die Kontaktflächen von Preset und Elektrode erhielten keine erfindungsgemäße, gerichtete Struktur der Kontaktflächen und wurden als Referenzsystem verschraubt.

### Variante B

Ein Preset und eine einzelne Elektrode mit der erfindungsgemäßen und gegensinnig orientierten Struktur der Kontaktflächen wurden miteinander verschraubt. Als Kontaktflächen wurden die Stirnflächen der Elektroden gewählt.

### Variante C

Die Kontaktflächen des Preset und der einzelnen Elektrode wurden mit einer Gleitschicht versehen. Die Gleitschicht bestand aus dem Lagerfett mit der Typenbezeichnung arcanol 12V von der Firma FAG Kugelfischer (Schweinfurt / Deutschland). Als Kontaktflächen wurden die Stirnfläche der Elektrode und die freien Gewindeflächen des Nippels ausgewählt. Die Dicke der Gleitschicht betrug 0,1 mm.

**Tabelle**

| Die angegebenen Werte gelten für Elektroden mit einem Durchmesser von 600 mm und für ein Anzugsmoment von 4000 Nm beim Verschrauben. | | | |
|---|---|---|---|
| | Maßnahme | Modifizierte Flächen | Lösemoment [Nm] |
| Variante A | ohne Gleitmittel, ohne gerichtete Struktur der Kontaktflächen | keine | 6000 |
| Variante B | mit gerichteter Struktur der Kontaktflächen | Stirnflächen der Elektroden | 9000 |
| Variante C | mit Gleitmittel (0,1 mm Lagerfett arcanol 12V) | Stirnfläche Elektrode und Gewindeflächen Nippel | >12000 |

Wie aus der Tabelle hervorgeht, war das Lösemoment abhängig von der Art der Oberflächenausführung bzw. -behandlung. Das niedrigste Lösemoment wurde bei Kontaktflächen ohne besondere Maßnahmen erreicht (Variante A). Bei Stirnflächen mit gegensinnig orientierter Struktur der Kontaktflächen der verschraubten Elemente wurden sehr hohe Lösemomente gemessen.
Zwar ergibt Variante C ein noch höheres Lösemoment als Variante B, dies ist aber nur mit Hilfe einer Zusatzbehandlung möglich. Demgegenüber wird bei Variante B das günstige Lösemoment ohne Zusatzbehandlung erreicht.

Durch die folgenden Figuren wird die Erfindung beispielhaft weiter erläutert. Es zeigen:
- Fig. 1: einen Schnitt parallel zur Längsachse durch eine Elektrode 1 mit beidseitig in die Stirnflächen 3 eingebrachten Schachteln, jeweils mit zylindrischem Innengewinde, sowie Ansicht der Längsseite eines unabhängigen Nippels 2 mit zylindrischem Gewinde;

- Fig. 2: eine Ansicht der Längsseite einer Elektrode 1 mit einem an einer Stirnseite 3 angeformten, integrierten koaxialen Nippel. An der anderen Stirnseite ist die Seitenansicht der Elektrode mit einem Schnitt parallel zur Längsachse aufgebrochen. Der Schnitt zeigt an dieser Stelle eine Schachtel mit konischem Innengewinde;
- Fig. 3: einen Schnitt parallel zur Längsachse durch ein Preset 9, das aus einer Elektrode 1 mit konischen Schachteln und einem Nippel 2 mit doppelt konischem Gewinde 5 besteht;
- Fig. 4: eine räumliche Darstellung der Stirnfläche 3 einer Elektrode 1 mit gerichtet strukturierter Kontaktfläche;
- Fig. 5: vergrößerte, modellhafte Darstellung einer gerichtet strukturierten Elektrodenstirnfläche 3 (Kontaktfläche).

### Beschreibung der Figuren:

Nach Fig. 1 sind als Kontaktflächen der Elektroden 1 zu nennen:
Stirnfläche 3 der Elektrode 1 und
Gewindeflächen 4 der koaxial angeordneten Elektrodenschachtel.
Der Schachtelboden 10 der Elektrode ist keine Kontaktfläche.
Bei einem unabhängigen Nippel 2 gibt es als Kontaktflächen die Gewindeflächen 5 des Nippels 2.
Die beidseitigen Stirnflächen 6 des Nippels 2 sind keine Kontaktflächen.

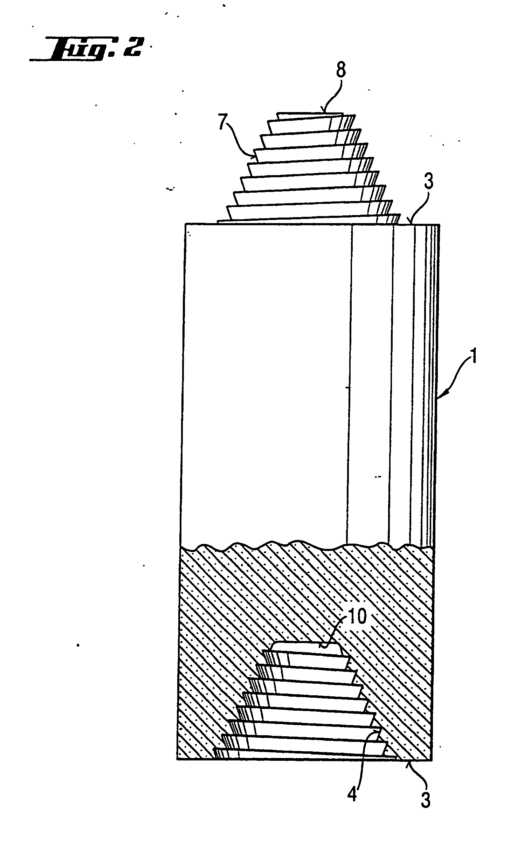

Nach Fig. 2 sind als Kontaktflächen der Elektroden 1 mit integriertem Nippel zu nennen:
Stirnfläche 3 der Elektrode 1 und
Gewindeflächen 7 des integrierten koaxialen Nippels sowie
an der anderen Stirnseite der Elektrode 1 deren Stirnfläche 3 und Gewindeflächen 4 der Schachtel.
Die äußere Stirnfläche 8 des integrierten koaxialen Nippels ist keine mit einer Gleitschicht zu versehende Kontaktfläche. Der Schachtelboden 10 der Elektrode ist keine Kontaktfläche.

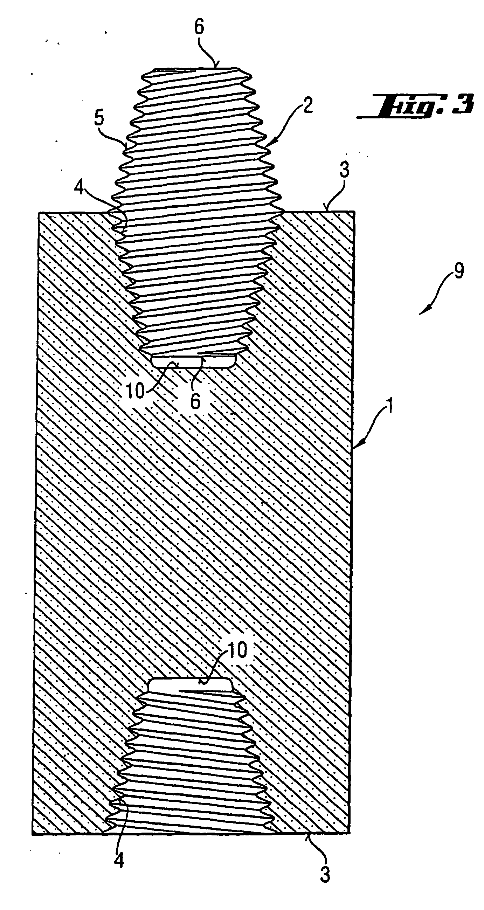

Nach Fig. 3 sind als innere Kontaktflächen des Preset 9 zu nennen:
Gewindeflächen 4 der koaxial angeordneten Elektrodenschachtel und die Gewindeflächen 5 des unabhängigen Nippels 2.
Die Stirnflächen 6 des Nippels 2 sind keine Kontaktflächen.
Als äußere Kontaktflächen des Preset 9 sind auf der Seite des eingeschraubten Nippels 2 zu nennen:
Gewindeflächen 5 des unabhängigen Nippels 2 sowie
Stirnfläche 3 der Elektrode 1.
Die Stirnflächen 6 des Nippels 2 sind keine Kontaktflächen.

Als äußere Kontaktflächen des Preset 9 sind auf der Seite ohne eingeschraubten Nippel zu nennen:
Stirnfläche 3 der Elektrode 1 und
Gewindeflächen 4 der koaxial angeordneten Elektrodenschachtel.
Der Schachtelboden 10 der Elektrode ist keine Kontaktfläche.

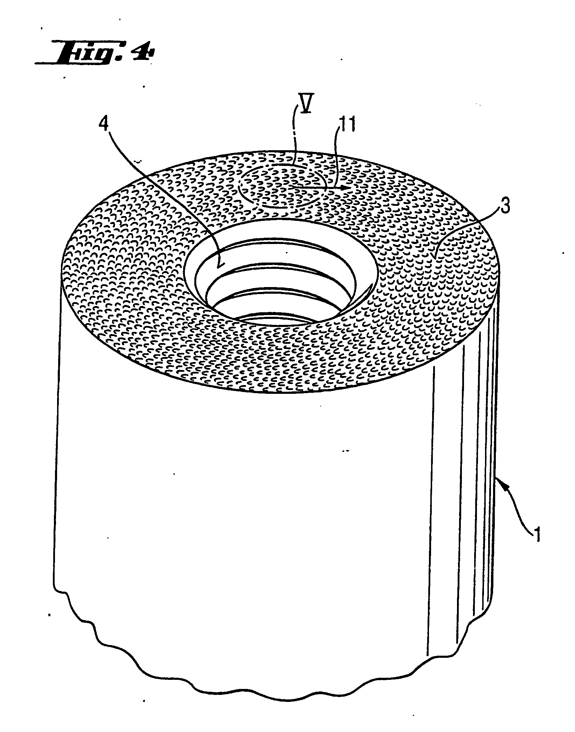

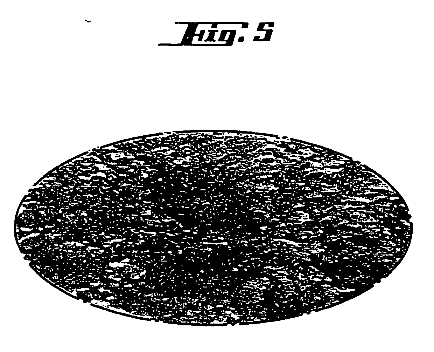

Nach Fig. 4 hat die Elektrode 1 auf der ebenen Stirnfläche 3 eine gerichtet strukturierte Kontaktfläche. Die einzelnen asymmetrischen schuppigen Erhebungen haben eine Vorzugsorientierung, die der Befestigungsrichtung 11 für rechtsdrehende Schrauben entspricht. Die Befestigungsrichtung 11 ist so zu verstehen, daß die in Fig. 4 gezeigte Elektrode 1 und ein darin eingeschraubter Nippel feststehen. Von oben her wird eine weitere, nicht gezeichnete Elektrode aufgeschraubt. Diese Elektrode dreht sich bei Befestigung in der Richtung des Pfeiles 11. Dieser Vorgang entspricht dem im Stahlwerk. Die Oberflächenstruktur des Feldes V aus Fig. 4 wird in Fig. 5 vergrößert dargestellt.

Fig. 5 zeigt aus der Kontaktfläche 3 der Elektrode 1 von Fig. 4 die Teilvergrößerung des Feldes V. Gezeigt wird die modellhafte Darstellung der gerichtet strukturierten Elektrodenstirnfläche.

### Bezugszeichenliste zu den Figuren

- 1: Elektrode
- 2: Unabhängiger Nippel
- 3: Stirnfläche der Elektrode
- 4: Gewindeflächen der Elektrodenschachtel
- 5: Gewindeflächen des Nippels
- 6: Stirnfläche des Nippels
- 7: Gewindeflächen des integrierten Nippels
- 8: äußere Stirnfläche des integrierten Nippels
- 9: Preset
- 10: Schachtelboden
- 11: Tangentiale Befestigungsrichtung für rechtsdrehendes Gewinde; die Befestigungsrichtung stimmt im wesentlichen mit der Richtung der gerichtet strukturierten Kontaktfläche überein

## Patentansprüche

1. Elektrodenstrang versehen mit Kohlenstoffelektroden (1) mit stirnseitigen Schachteln und Innengewinden (4) und je zwei solche Elektroden (1) verbindenden Kohlenstoff-Nippeln (2) oder versehen mit Kohlenstoffelektroden (1) mit Schachtel und Innengewinde (4) an einer Stirnseite und integriertem Nippel an der anderen Stirnseite, vorgesehen zum Einsatz in einem Lichtbogenofen zur Herstellung von hochschmelzenden Metallen, wobei die Kohlenstoffelektroden (1) und Kohlenstoff-Nippel (2) ideal ausgebildete Kontaktflächen mit daraus hervortretenden, gerichtet strukturierten, schuppigen Erhebungen haben, **dadurch gekennzeichnet, dass**
die gerichtet strukturierten, schuppigen Erhebungen über der ideal ausgebildeten Kontaktfläche in einem geringen Höhenbereich von einem bis hundert Mikrometern hervortreten, und dass die benachbarten Kontaktflächen einer Schraubverbindung einen Anpressdruck im Bereich von 0,1 bis 80 N/mm² haben.

2. Elektrodenstrang nach Anspruch 1 **dadurch gekennzeichnet, dass**
die ideal ausgebildeten Kontaktflächen der Kohlenstoffelektroden (1) und Kohlenstoff-Nippel (2) eben oder gekrümmt sind.

3. Elektrodenstrang nach den Ansprüchen 1 und 2 **dadurch gekennzeichnet, dass**
die schuppigen Erhebungen auf den gerichtet strukturierten Kontaktflächen arteigenes Material der Kohlenstoffelektroden (1) und Kohlenstoff-Nippel (2) sind.

4. Elektrodenstrang nach einem oder mehreren der Ansprüche 1 bis 3 **dadurch gekennzeichnet, dass**
die schuppigen Erhebungen eine im wesentlichen asymmetrische, durch einen unterschiedlich steilen Anstieg der Flanken charakterisierte Gestalt haben, wobei die Flanken der schuppigen Erhebungen in der Befestigungsrichtung der Schraubverbindung einen im wesentlichen flachen Anstieg und in der entgegengesetzten Lösungsrichtung der Schraubverbindung einen im wesentlichen steilen Anstieg haben.

5. Elektrodenstrang nach einem oder mehreren der Ansprüche 1 bis 4 **dadurch gekennzeichnet, dass**
die höchsten Höhen einer schuppigen Erhebung als Spitze oder als im wesentlichen radial orientierter Kamm - bezogen auf die Längsachsen der meist zylindrischen Elemente eines Elektrodenstranges - ausgebildet sind.

6. Elektrodenstrang nach Anspruch 4 **dadurch gekennzeichnet, dass**
jeweils der flache Anstieg aller schuppigen Erhebungen in der Befestigungsrichtung in einer Kontaktfläche der Kohlenstoffelektroden (1) und Kohlenstoff-Nippel (2) angeordnet ist.

7. Elektrodenstrang nach einem oder mehreren der Ansprüche 1 bis 6 **dadurch gekennzeichnet, dass**
die schuppigen Erhebungen auf der jeweiligen Kontaktfläche der Kohlenstoffelektroden (1) und Kohlenstoff-Nippel (2) statistisch verteilt sind.

8. Elektrodenstrang nach einem oder mehreren der Ansprüche 1 bis 6 **dadurch gekennzeichnet, dass**
die schuppigen Erhebungen die jeweilige ideal ausgebildete Kontaktfläche der Kohlenstoffelektroden (1) und Kohlenstoff-Nippel (2) partiell bedecken oder in Form von Mustern angeordnet sind.

9. Elektrodenstrang nach einem oder mehreren der Ansprüche 1 bis 8 **dadurch gekennzeichnet, dass**
die jeweiligen Kontaktflächen mindestens 100 Meter Kammlänge der schuppigen Erhebungen je Quadratmeter Kontaktfläche, vorzugsweise 300 Meter Kammlänge der schuppigen Erhebungen je Quadratmeter Kontaktfläche, enthalten.

10. Elektrodenstrang aus Kohlenstoffelektroden (1) und Kohlenstoff-Nippeln (2) nach einem oder mehreren der Ansprüche 1 bis 9 **dadurch gekennzeichnet, dass**
die gleichartigen tangentialen Richtungen - entweder Befestigungs- oder Lösungsrichtung der Schraubverbindung - der gerichtet strukturierten Kontaktflächen von zwei benachbarten Kohlenstoffelektroden (1) und/ oder vom diese Kohlenstoffelektroden (1) verbindenden Kohlenstoff-Nippel (2) jeweils gegensinnig ausgerichtet sind.

11. Elektrodenstrang nach einem oder mehreren der Ansprüche 1 bis 10 **dadurch gekennzeichnet, dass**
eine Kohlenstoff-Elektrode (1) und ein Kohlenstoff-Nippel (2) zu einem Preset (9) zusammengefasst sind und dass die inneren Kontaktflächen des Preset (9) gerichtet strukturiert sind wobei die inneren Kontaktflächen aus den Gewindeflächen der Elektrodenschachtel (4) und des Nippels (5) bestehen.

## Claims

1. Electrode column provided with carbon electrodes (1) having sockets and internal threads (4) on the face and carbon nipples (2) connecting in each case two such electrodes (1), or provided with carbon electrodes (1) having a socket and an internal thread (4) on one face and having an integrated nipple on the other face, provided for use in an arc furnace for the production of high-melting metals, with the carbon electrodes (1) and carbon nipples (2) having ideally formed contact surfaces with directionally structured, scale-like elevations protruding therefrom, **characterised in that** the directionally structured, scale-like elevations protrude over the ideally formed contact surface over a small height range of one to a hundred micrometres, and **in that** the adjacent contact surfaces of a screwed connection have a contact pressure in the range of 0.1 to 80 N/mm².

2. Electrode column according to claim 1, **characterised in that** the ideally formed contact surfaces of the carbon electrodes (1) and carbon nipples (2) are planar or curved.

3. Electrode column according to claims 1 and 2, **characterised in that** the scale-like elevations on the directionally structured contact surfaces are made of the material of the carbon electrodes (1) and carbon nipples (2).

4. Electrode column according to one or more of claims 1 to 3, **characterised in that** the scale-like elevations have a substantially asymmetrical shape **characterised by** a variably steep rise of the flanks, with the flanks of the scale-like elevations having a substantially shallow rise in the fastening direction of the screwed connection and having a substantially steep rise in the opposite loosening direction of the screwed connection.

5. Electrode column according to one or more of claims 1 to 4, **characterised in that** the greatest heights of a scale-like elevation are formed as a point or as a substantially radially orientated comb - relative to the longitudinal axes of the mostly cylindrical elements of an electrode column.

6. Electrode column according to claim 4, **characterised in that** each shallow rise of all the scale-like elevations is arranged in the fastening direction in a contact surface of the carbon electrodes (1) and carbon nipples (2).

7. Electrode column according to one or more of claims 1 to 6, **characterised in that** the scale-like elevations are statistically distributed over the respective contact surface of the carbon electrodes (1) and carbon nipples (2).

8. Electrode column according to one or more of claims 1 to 6, **characterised in that** the scale-like elevations partially cover the respective ideally formed contact surface of the carbon electrodes (1) and carbon nipples (2) or are arranged in the form of patterns.

9. Electrode column according to one or more of claims 1 to 8, **characterised in that** the respective contact surfaces contain at least 100 metres of comb length of the scale-like elevations per square metre of contact surface, preferably 300 metres of comb length of the scale-like elevations per square metre of contact surface.

10. Electrode column of carbon electrodes (1) and carbon nipples (2) according to one or more of claims 1 to 9, **characterised in that** the similar tangential directions - either the fastening or loosening direction of the screwed connection - of the directionally structured contact surfaces of two adjacent carbon electrodes (1) and/or carbon nipples (2) connecting these carbon electrodes (1) are respectively aligned in opposite directions.

11. Electrode column according to one or more of claims 1 to 10, **characterised in that** a carbon electrode (1) and a carbon nipple (2) are combined to form a preset (9), and **in that** the inner contact surfaces of the preset (9) are directionally structured, with the inner contact surfaces consisting of the threaded surfaces of the electrode socket (4) and of the nipple (5).

## Revendications

1. Colonne d'électrode pourvue d'électrodes en carbone (1) dotées de filetages (4) et de boîtiers côté avant ainsi que de raccords filetés (2) en carbone reliant respectivement deux de ces électrodes (1) ou pourvue d'électrodes de carbone (1) dotées d'un boîtier et d'un filetage (4) sur une face frontale et d'un raccord fileté intégré sur l'autre face frontale, prévue pour être employée dans un four à arc pour la fabrication de métaux réfractaires, les électrodes de carbone (1) et les raccords filetés en carbone (2) ayant des surfaces de contact conçues idéalement avec des bossages lamellaires faisant saillie et structurés en faisceau,
**caractérisée en ce que**
les bossages lamellaires structurés en faisceau font saillie sur la surface de contact conçue idéalement dans une faible plage de hauteur d'un à cent micromètres et les surfaces de contact voisines d'une liaison vissée ont une pression de serrage de l'ordre de 0,1 à 80 N/mm².

2. Colonne d'électrode selon la revendication 1,
**caractérisée en ce que**
les surfaces de contact idéales des électrodes en carbone (1) et des raccords filetés en carbone (2) sont planes ou courbées.

3. Colonne d'électrode selon les revendications 1 et 2,
**caractérisée en ce que**
les bossages lamellaires sur les surfaces de contact structurées en faisceau sont une matière caractéristique des électrodes de carbone (1) et des raccords filetés en carbone (2).

4. Colonne d'électrode selon une ou plusieurs des revendications 1 à 3,
**caractérisée en ce que**
les bossages lamellaires ont une forme essentiellement asymétrique **caractérisée par** une montée des flancs de différentes inclinaisons, les flancs des bossages lamellaires ayant une montée essentiellement plane dans la direction de fixation de la liaison vissée et une montée essentiellement pentue dans la direction de desserrage opposée de la liaison vissée.

5. Colonne d'électrode selon une ou plusieurs des revendications 1 à 4,
**caractérisée en ce que**
les hauteurs les plus élevées d'un bossage lamellaire sont conçues sous forme de pointe ou de peigne orienté essentiellement radialement par rapport aux axes longitudinaux des éléments le plus souvent cylindriques d'une colonne d'électrode.

6. Colonne d'électrode selon la revendication 4,
**caractérisée en ce que**
la montée plane de tous les bossages lamellaires est disposée chaque fois dans la direction de fixation dans une surface de contact des électrodes de carbone (1) et des raccords filetés en carbone (2).

7. Colonne d'électrode selon une ou plusieurs des revendications 1 à 6,
**caractérisée en ce que**
les bossages lamellaires sur la surface de contact respective des électrodes de carbone (1) et des raccords filetés en carbone (2) sont répartis statiquement.

8. Colonne d'électrode selon une ou plusieurs des revendications 1 à 6,
**caractérisée en ce que**
les bossages lamellaires recouvrent partiellement la surface de contact conçue idéalement par les électrodes en carbone (1) et les raccords filetés en carbone (2) ou bien sont disposés sous forme de modèles.

9. Colonne d'électrode selon une ou plusieurs des revendications 1 à 8,
**caractérisée en ce que**
les surfaces de contact respectives contiennent une longueur de peigne des bossages lamellaires d'au moins 100 mètres par mètre carré de surface de contact, de préférence 300 mètres.

10. Colonne d'électrode composée d'électrodes de carbone (1) et de raccords filetés de carbone (2) selon une ou plusieurs des revendications 1 à 9,
**caractérisée en ce que**
les directions tangentielles de même nature (soit la direction de fixation soit celle de desserrage de la liaison vissée) des surfaces de contact structurées en faisceau de deux électrodes voisines en carbone (1) et/ou du raccord fileté en carbone (2) reliant ces électrodes de carbone (1) sont respectivement orientées en sens inverse.

11. Colonne d'électrode selon une ou plusieurs des revendications 1 à 10,
**caractérisée en ce qu'**
une électrode de carbone (1) et un raccord fileté en carbone (2) sont regroupés en un preset (9) et les surfaces de contact intérieures du preset (9) sont structurées en faisceau, les surfaces de contact intérieures se composant des surfaces de taraudage du boîtier d'électrodes (4) et du raccord fileté (5).
